# EUROPEAN PATENT APPLICATION

(11) **EP 4 414 241 A1**
(43) Date of publication of application: **14.08.2024**
(21) Application number: 22906249.2
(22) Date of filing: 29.11.2022
(51) Int. Cl.: B61L 27/10

(54) **TRAIN CONTROL SYSTEM AND METHOD BASED ON RESOURCE MANAGEMENT**

(30) Priority: 13.12.2021 CN 202111522281
(71) Applicant: Casco Signal Ltd., Shanghai 200435 (CN)
(72) Inventor: PAN, Liang, Shanghai 200435 (CN); WANG, Xiaoyong, Shanghai 200435 (CN); LI, Weijuan, Shanghai 200435 (CN)
(74) Representative: Sun, Yiming
(86) International application number: PCT/CN2022/134972
(87) International publication number: WO 2023/109499

(57) **Abstract**

The present invention relates to a train control system and control method based on resource management, the system including a dispatching center server, a trackside resource manager and a vehicle-mounted train control device, wherein the vehicle-mounted train control device is connected to the dispatching center server and the trackside resource manager respectively; the dispatching center server is used to monitor and control the operation of a train; the trackside resource manager is used to manage a resource, control a switch, establish a movement authorization direction, and control an annunciator; and the vehicle-mounted train control device is used to calculate safe positioning, calculate a movement authorization, release a route resource, establish a train-train communication with front and back trains when the route resource is in a "shared" state to interact the safe positioning of the trains in real time, and determine a end point of the movement authorization for the back train. Compared with the prior art, the present invention has the advantages of using the existing route resources to improve the safety performance of operation and transportation capacity, reduce the cost of station yard transformation, and improve the economic and social benefits.

## Description

### FIELD OF TECHNOLOGY

The present invention relates a train signal control system, and in particular, to a train control system and control method based on resource management.

### BACKGROUND

A traditional signal system uses a route manner to manage route resources of a station and calculates movement authorization on the basis of a route. With a continuous growth of transport capacity demands, rail transit has to be in a super-strength operation state in part periods. Once various faults affecting train operation occur on a route suddenly, an emergency treatment is subject to the existing technical methods and matched emergency plans of operation management, which makes the efficiency of the system to restore an operation order low. From a perspective of system performance, traditional interlocking and train control repeat a rear-end collision prevention function in a station, and consume large safety time and a space margin. From a perspective of transport capacity, due to the exclusive characteristics of route resources, it has become a key factor restricting the outgoing (outbound) capacity and turn-back capacity of the train. In addition, the traditional signal control system of rail transit is subject to numerous subsystems, complex interfaces, and a variety of devices, and the real-time performance and reliability of the system have little room for further improvement, which has become an obstacle to development of four-network integration. For route capacity, room for improvement and enhancement is close to a limit.

After searching, disclosed in a Chinese patent application No. CN201910103988.7 are a management method and equipment of rail transit resources. This patent application only describes a process of applying and releasing a resource by taking the resource as being exclusive. Meanwhile, disclosed in a Chinese patent application No. CN202011620849.0 are a train operation control system and method of train-ground coordination, which specifically describes a division of route resources through two layers, wherein the first layer is of trackside with a section as a smallest unit, the second layer takes a vehicle-mounted train control device to achieve resource subdivision, and a front train decides whether to share a subdivided zone, and locking and unlocking of a switch are done by the vehicle-mounted train control device. In addition, disclosed in a Chinese patent application No. CN201910856602.X are a train operation safety protection system and method on the basis of dynamic resource management, which specifically describes that a train applies to an Object Controller (OC) for movement for a route in real time according to a train operation plan, and dynamically obtains a route resource; through cooperation between OBC and the OC, dynamic dispatching and unified management of a resource are realized; and main train operation control functions are completed by a vehicle-mounted train control device, and the trackside object controller is used to execute a switch control command initiated by the vehicle-mounted train control device.

However, in the above existing patent applications, when a plurality of trains apply for route resources concurrently on the basis of operation tasks, it does not involve how to deal with a deadlock protection of the route resources during resource competition, a protection of front and side conflicts, an interlocking relationship among the resources and switch, and an annunciator. Therefore, how to avoid resource competition and deadlock, alleviate the side conflict, front conflict, switch zone route drop risk, rear-end conflict and other operation risks has become a technical problem to be solved.

### SUMMARY

The purpose of the present invention is to provide a train control system and control method based on resource management in order to overcome the defects existing in the prior art.

The purpose of the present invention can be realized by the following technical solutions:
According to one aspect of the present invention, provided is a train control system based on resource management, comprising a dispatching center server, a trackside resource manager, and a vehicle-mounted train control device, wherein the vehicle-mounted train control device is connected to the dispatching center server and the trackside resource manager respectively;
the dispatching center server is used to monitor and control the operation of a train;
the trackside resource manager is used to manage a resource, control a switch, establish a movement authorization direction, and control an annunciator; and
the vehicle-mounted train control device is used to calculate safe positioning, calculate a movement authorization, release a route resource, establish a train-train communication with front and back trains when the route resource is in a "shared" state to interact the safe positioning of the trains in real time, and determine a end point of the movement authorization for the back train.

As a preferred technical solution, the resource management comprises:
on the basis of a resource characteristics, the operation of the train, and a safe protection principle, it is determined that a plurality of trains concurrently apply the route resource and an operation deadlock is avoided when the plurality of trains compete for the resource;
when a resource sharing state is determined on the basis of an operation scenario and the route resource, the train-train communication is used for cooperative operation, so as to maximize the use of the route resource and improve a route passing-through capacity; and
when the route resource is in an exclusive state, the front and back trains are orderly managed to use the exclusive resource by using conflict and sequencing management of the resource and the principles of first-come, first-served and release upon used.

As a preferred technical solution, the resource sharing means that the trackside resource manager allocates route resources to the front and back trains simultaneously and initiates the establishment of the communication between the front and back trains under a condition that operation tasks and operation paths of the front and back trains are consistent and the operation deadlock is avoided effectively.

As a preferred technical solution, the resource being exclusive means that for a "conflicting" resource during operation, if operation tasks of the front and back trains are inconsistent and operation paths have an intersection, the trackside resource manager, on the basis of the principle of first come first served, allocates the resource to the back train and determine a safe operation direction only after the front train leaves the zone and releases the resource.

According to another aspect of the present invention, provided is a control method using the train control system based on resource management according to claim 1, the method comprises the following steps:
step 1, managing a resource: application, sequencing, conflict, allocation, and release states of the resource are determined according to a resource management policy on the basis of a resource application and a resource release initiated by the vehicle-mounted train control device;
step 2, interlocking relationship check: a switch is controlled and a direction locking of a related logical zone is established on the basis of the allocation state of the resource and an interlocking condition of the logical zone; the trackside resource manager determines a safe operation direction of the resource, and transmits, in combination with the interlocking condition of the logical zone, the resource allocation state on the basis of the safe operation direction to the vehicle-mounted train control device; and
step 3, movement authorization establishment: on the basis of the allocation and the direction locking of the logical zone, an interlocking condition of the related logical zone, and the safe positioning of the front train, the vehicle-mounted train control device calculates the end point of the movement authorization; and meanwhile, the trackside resource manager controls a signal of the train in a degraded mode on the basis of the direction locking of the trackside logical zone and the interlocking condition of the related logical zone.

As a preferred technical solution, in step 1, the resource management policy is specifically made as follows: when the train executes an operation task, in order to avoid deadlock caused by concurrent preemption of the route resource by a plurality of trains, the route resource is sub-divided and the characteristics of the route resource is defined, and a reasonable resource management policy is made on the basis of the characteristics of the route resource.

As a preferred technical solution, the subdividing the route resource is specifically as follows: dividing the resource into a shared resource and an exclusive resource,
wherein the shared resource is as follows: when the route resource is available for a plurality of trains to continuously pass, the logical zone is allowed to be requisitioned by the plurality of trains at the same time; and after the logical zone is requisitioned by the plurality of trains, the trains are sequenced according to the front and back positions of the trains; such route resource is the shared resource; and
the exclusive resource is as follows: when operation of a subsequent train conflicts with operation of the first train, the resource is exclusively allocated on the basis of resource conflict management, and the resource is not allowed to be allocated to the subsequent train until the first train releases the resource.

As a preferred technical solution, the making a reasonable resource management policy on the basis of the characteristics of the route resource is specifically as follows: the trains can cooperatively and efficiently run in the shared route resource, while ensuring that the operations of the plurality of trains would not cause deadlock resulting in operation congestion when the route resource need to be "exclusive".

As a preferred technical solution, the resource application in the step 1 needs to meet the following conditions at the same time:
(a1) a resource application command is received from the train;
(a2) there is no other train on the applied route resource, or if another communication positioning train is on the applied route resource, and the applied resource is the same as a resource path allocated to the front train, a end point of the applied route resource does not exceed a end point of the resource allocated to the front train;
(a3) the system is powered on and in an unlocked state or the system is in a successful initialization state currently; and
(a4) the system is not in an abnormal state currently.

As a preferred technical solution, the sequencing of the resource in the step 1 is specifically as follows: when a condition of resource application is met, the trackside resource manager established a resource requisition state of the logical zone for the current train, and the route resource would automatically enter a sequencing state; and the trackside resource manager establishes a sequencing list for the resource; and if a resource already in the requisition state is requested by other trains again, the subsequent train is queued in the sequencing list in order.

As a preferred technical solution, detection of a conflict state of the resource in the step 1 is used to deal with an operation deadlock situation that may occur when a plurality of trains operate cooperatively, so as to ensure that a specific zone is exclusive to only one train during operation.

As a preferred technical solution, the conflict state of the resource in the step 1 includes a first deadlock protection scenario, a second deadlock protection scenario and an exclusive protection scenario; and a common feature of the three protection scenarios is: the resource is exclusively used by one train, and a corresponding route resource can only be allocated to the subsequent train after the front train completely releases the resource.

As a preferred technical solution, the first deadlock protection scenario is specifically as follows:
when the front train has entered a turn-back route, in order to avoid that turn-back operation of the front train can not be completed due to tracking operation of the subsequent train, if an ATS transmits a turn-back operation task for the front train, the turn-back route and a critical switch required for the turn-back operation should be set as in a "turn-back mode";
when the turn-back route and the critical switch where the train is located are in the turn-back mode, a corresponding logical zone resource on the route need to ensure that only one train is authorized to pass through; when the logical zone resource is in the "turn-back mode" state, once the subsequent train applies for the route resource, the trackside resource manager should determine that the logical zone becomes in the "conflict" state; and
when each logical zone within the scope of a departing operation task of the front train has been allocated and direction locking of the contained logical zone has been established, it is determined that the "turn-back mode" is invalid immediately.

As a preferred technical solution, the second deadlock protection scenario is specifically as follows:
once the current train operation task contains a logical zone in an opposite direction of the current task, the trackside resource manager should determine that the logical zone becomes in the "conflict" state.

As a preferred technical solution, the exclusive protection scenario is specifically as follows:
for some route resources, only one train is allowed to occupy the zone, which is defined as the exclusive resource;
the current train operation task contains a logical zone occupied by another non-communication train, which is exclusively used by the non-communication train; the system should determine the logical zone to be in the "conflict" state, and the subsequent train should be authorized to enter the logical zone only after the non-communication train has completely passed the logical zone; and
when the logical zone of the route is defined as "exclusive" property, once the subsequent train applies for the route resource, the system determines the logical zone to be in the "conflict" state, and the resource cannot be re-allocated to another train before being released by the current train, and the "conflict" resource occupied by the current train is regarded as a limit point by other trains.

As a preferred technical solution, after the system is initialized, the resource manager determines that all the logical zones are in the "non-conflict" state;
when any one of the following conditions is met, the resource manager should determine that a logical zone is in the "conflict" state:
   (b1) the logical zone resource is in a sequencing state, and the logical zone has been in a direction locking state, and the direction of the logical zone is inconsistent with the direction of an operation task;
   (b2) the logical zone resource is in the sequencing state, and the logical zone has been occupied by a non-communication train;
   (b3) the logical zone resource is in the sequencing state, the train is not the first train in the sequence, and the zone where the logical zone is located is in the turn-back mode;
   (b4) the logical zone resource is in the sequencing state, the train is not the first train in the sequence, and the zone where the logical zone is located belongs to a zone that only one train is allowed to enter;
when any one of the following conditions is met, the system should determine that the logical zone is in the "non-conflict" state:
   (c1) if, in the resource sequencing state, the direction of the logical zone is not hostile to the direction of the current train operation task, and if, in the resource sequencing state, the logical zone is not occupied by a non-communication train, and the train is the first train in the sequence; and
   (c2) the resource becomes in an un-sequencing state.

As a preferred technical solution, the allocation of the resource in step 1 is specifically as follows:
in resources requisitioned by the train, if an exclusive resource has been released by the front train, that is, the resource is in the sequencing state and the resource is in the non-conflict state, then the resource corresponding to the logical section is in the allocation state, and the resource manager determines that the logical zone resource is automatically allocated to the train;
the trackside resource manager determines that the resource corresponding to the logical zone is in an "unallocated" state if any one of the following conditions is met:
   (d1) after startup;
   (d2) the resource becomes in the un-sequencing state; or
   (d3) the resource becomes in the conflict state.

As a preferred technical solution, the release of resource in step 1 comprises automatic release of resource and manual cancellation of an operation task;
the automatic release of resource is specifically:
   the train operates in the allocated resource; with movement of the train and positioning thereof, the train automatically transmits a command to release the corresponding logical zone resource to the trackside resource manager after determining that the train departs the logical zone; and
the manual cancellation of the operation task is specifically as follows:
   in a fault scenario, the resource is released manually because position information of the train cannot be obtained.

As a preferred technical solution, a specific process of the release of resource in the step 1 is as follows:
in a degraded condition, regardless of whether the positioning of the train is lost, the direction locking of each logical zone should be unlocked one by one according to the state of the logical zone and occupancy or idle of two continuous logical zones, and the corresponding resource should be released; and
once receiving the logical zone resource release command of the train, the trackside resource manager deletes the current train from the logical zone resource sequencing list and lifts the allocation state of the current train from the logical zone; if the number of trains in the logical zone resource list is zero, the trackside resource manager determines to lift the direction locking of the logical zone and release the resource of the logical zone.

As a preferred technical solution, the interlocking condition check in the step 2 is specifically as follows: when the resource is in an allocation state, it is necessary to check whether relevant interlocking conditions on a route are met in real time, and determine a safe running direction of the current train,
wherein the direction locking needs to meet the following interlocking conditions at the same time:
(e1) the switch is in a normal state and the position thereof is consistent with the position required by an operation task;
(e2) the switch is not in a locking state;
(e3) the logical zone is not in a hostile direction;
(e4) the logical zone is not occupied by a non-communication train;
(e5) logical zones corresponding to all side defense zones of the switch are not occupied by the non-communication train;
(e6) a contact route interface condition is met;
(e7) the system is powered on and in an unlocking state or the system is in a successful initialization state currently;
(e8) the system is not in an abnormal state currently; and
(e9) the logical zone is not in a locking state;
for the switch position, if the switch position is not at a position required by the operation task, a control switch command is allowed until the switch turns to the position required by the operation task;
after the establishment of direction locking, if any of the above interlocking conditions is not met, the direction locking state is still maintained in the trackside resource manager, but when transmitting the resource allocation state to the vehicle-mounted train control device, the trackside resource manager needs to calculate and transmit in real time on the basis of a comprehensive condition such as the direction locking state of the logical zone and the direction locking interlocking condition being met; if the logical zone is in the direction locking state, once any direction locking condition is not met (for example, a switch indication is lost suddenly), the trackside resource manager stops transmitting the allocation state of the logical zone to the vehicle-mounted train control device, and the vehicle-mounted train control device determines whether the logical zone is a end point of movement authorization on the basis of the allocation state of the logical zone; and the current vehicle-mounted train control device determines a safe running direction for the vehicle-mounted train control device on the basis of the resource allocation state of the trackside resource manager, and comprehensively calculates the end point of the movement authorization in combination with the safe positioning of the front train; and
the direction locking is established, which is used to determine the safe operation direction of the train; to transmit hostile check information to adjacent routes to avoid the risk of front conflict; to establish a directional locking on a side defense zone associated with the switch towards the outside of the operation path to avoid the risk of side conflict.

As a preferred technical solution, the movement authorization establishment in the step 3 is specifically as follows:
when the trackside resource manager confirms the allocatable resource and direction thereof for the vehicle-mounted train control device, the vehicle-mounted train control device comprehensively calculates the movement authorization direction and the end point of the movement authorization for the train on the basis of the following conditions:
(f1) the allocated route resource received from the trackside resource manager are included in a resource range applied for by the vehicle-mounted train control device;
(f2) the direction of the allocated route resource received from the trackside resource manager is consistent with the direction of an operation path of the vehicle-mounted train control device; and
(f3) the safe positioning information of the rear of the front train is received from the vehicle-mounted train control device of the front train,
wherein for a degraded train, the signal opening is used as a train operation certificate or movement authorization of the degraded train, so if the current train becomes the degraded train, it is also necessary to determine the signal opening for the degraded train on the basis of a traditional interlocking principle.

Compared with the prior art, the present invention has the following advantages:
(1) In the present invention, a route resource management policy is made on the basis of the dynamic "sharing" and "exclusive" characteristics of route resources, which can fully squeeze existing station yard route resources to improve capacity and reduce the cost of station yard transformation, thus improving the economic and social benefits;
(2) In the present invention, the closed-loop based control method, in combination with the safe running direction of route resources and the related interlocking conditions of the route, can effectively avoid front conflict, side conflict, derailment risk when passing the switch and other operation risks, and significantly improve the safety compare with the traditional train control system;
(3) In the present invention, the closed-loop based control method, in combination with the safe running direction and annunciator control, can satisfy the compatibility of the train control system based on the resource management and the traditional train control system, meet the mixed operation of trains in a plurality of modes, realize seamless switching of different modes, ensure the availability of the system, and is suitable for routes in multi-network fusion; and
(4) In the present invention, the resource management policy, in combination with switch control and the safe running direction of resource, can effectively avoid operation deadlock caused by concurrent operation tasks of a plurality of trains at the same switch and ensure operational efficiency.

### BRIEF DESCRIPTION OF THE DRAWINGS

FIG. 1 is a flow chart of resource management of the present invention;
FIG. 2 is a diagram of resource allocation activities of the present invention;
FIG. 3 is a diagram of manual resource release activities of the present invention;
FIG. 4 is a diagram of train automatic resource release activities of the present invention;
FIG. 5 is a diagram of resource interlocking condition check activities of the present invention;
FIG. 6 is a diagram of movement authorization determination activities of the present invention;
FIG. 7 is a schematic diagram of a transposition crossover side conflict defense of the present invention;
FIG. 8 is a diagram of a turn-back operation scenario of the present invention; and
FIG. 9 is a diagram of resource allocation state transition of the present invention.

### DESCRIPTION OF THE EMBODIMENTS

The following is a clear and complete description of the technical solutions in the embodiments of the present invention in combination with the drawings attached to the embodiments of the present invention. Obviously, the embodiments described are a part of the embodiments of the present invention, but not the whole embodiments. On the basis of the embodiments of the present invention, all other embodiments obtained by a person skilled in the art without creative labor shall fall within the protection scope of the present invention.

By analyzing route resource, subdividing the route resource and utilizing resource management method in combination with the safety protection principle of rail transit, the present invention avoids resource competition and deadlock, alleviates the side conflict, front conflict, switch zone route drop risk, rear-end conflict and other operational risks, and finally improves operation safety performance and transportation capacity by utilizing existing route resources, which reduces the cost of station yard transformation and improves the economic and social benefits.

A train control system based on resource management of the present invention, wherein the system comprises:
a dispatching center server, a trackside resource manager, and a vehicle-mounted train control device;
the dispatching center server is connected to the vehicle-mounted train control device, and the vehicle-mounted train control device is connected to the trackside resource manager;
the trackside resource manager interfaces with trackside signal devices such as a switch machine, an annunciator, a platform screen door;
the trackside resource manager is used to manage a resource, control a switch, establish a movement authorization direction, and control an annunciator; and
the vehicle-mounted train control device is used to calculate safe positioning, calculate a movement authorization, release a route resource, establish a train-train communication with front and back trains when the resource is in a "shared" state to interact the safe positioning of the trains in real time, and determine a end point of the movement authorization for the back train,
wherein the resource management means that on the basis of a resource characteristics, the operation of the train, and a safe protection principle, it is determined that a plurality of trains concurrently apply the route resource and an operation deadlock is avoided when the plurality of trains compete for the resource; when a resource sharing state is determined on the basis of an operation scenario and the route resource, the train-train communication is used for cooperative operation, so as to maximize the use of the route resource and improve a line passing-through capacity; and when the route resource is in an exclusive state, the front and back trains are orderly managed to use the exclusive resource by using conflict and sequencing management of the resource and the principles of first-come, first-served and release upon used;
the resource sharing means that the trackside resource manager allocates route resources to the front and back trains simultaneously and initiates the establishment of the communication between the front and back trains under a condition that operation tasks and operation paths of the front and back trains are consistent and the operation deadlock is avoided effectively; and
the resource being exclusive means that for a "conflicting" resource during operation, if operation tasks of the front and back trains are inconsistent and operation paths have an intersection, the trackside resource manager, on the basis of the principle of first come first served, allocates the resource to the back train and determine a safe operation direction only after the front train leaves the zone and releases the resource.

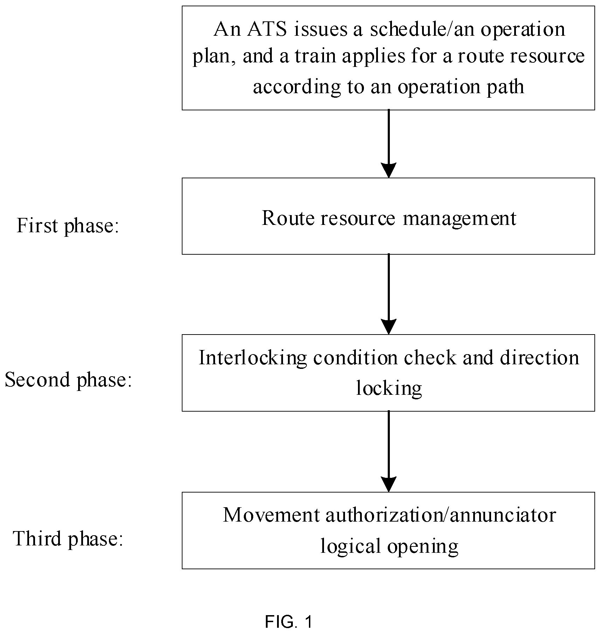

From the resource to the establishment of the movement authorization, the train control system based on the resource management undergoes 3 phases (as shown in FIG. 1):
Phase 1: managing a resource. Managing a resource: requisition, sequencing, conflict, allocation, and release states of the resource are determined according to a resource management policy on the basis of a resource application and a resource release initiated by the vehicle-mounted train control device.
Phase 2: checking an interlocking relationship. A switch is controlled and a direction locking of a related logical zone is established on the basis of the allocation state of the resource and an interlocking condition of the logical zone; the resource manager determines a safe operation direction of the resource, and transmits, in combination with the interlocking condition of the logical zone, the resource allocation state on the basis of the safe operation direction to the vehicle-mounted train control device.
Phase 3: establishing a movement authorization. On the basis of the allocation and the direction locking of the logical zone, an interlocking condition of the related logical zone, and the safe positioning of the front train, the vehicle-mounted train control device calculates the end point of the movement authorization. The trackside resource manager controls a signal of the train in a degraded mode on the basis of the direction locking of the trackside logical zone and the interlocking condition of the related logical zone.

A first phase: a resource management policy.

In order to complete operation tasks, a plurality of trains need to run cooperatively on the route in a reasonable and orderly manner, and when the train executes an operation task, in order to avoid deadlock caused by concurrent preemption of the route resource by a plurality of trains, the route resource is sub-divided and the characteristics of the route resource is defined, and a reasonable resource management policy is made on the basis of the characteristics of the route resource.

When the route resource is available for a plurality of trains to continuously pass, the logical zone is allowed to be requisitioned by the plurality of trains at the same time; and after the logical zone is requisitioned by the plurality of trains, the trains are sequenced according to the front and back positions of the trains; such resource has the characteristics of being "shared".

When operation of a subsequent train conflicts with operation of the first train, the resource is exclusively allocated on the basis of resource conflict management, and the resource is not allowed to be allocated to the subsequent train until the first train releases the resource.

When a train applies for a resource, it is necessary to prevent a back train from being allocated a resource in a downstream zone of a front train before the front train when the front train has not applied for the resource, resulting in an operation deadlock of the front and back trains. When the front train executes a turn-back work, it is necessary to prevent from applying for a resource for returning back to a critical switch for the back train in advance when the front train has not yet execute the turn-back work, resulting in the operation deadlock of the front and back trains; and when the front train operates in a route zone with "exclusive" characteristics (such as a ventilation shaft zone, a route terminal zone), it is necessary to prevent the two trains from running in the zone at the same time. In these three operation scenarios, the route resource also has the characteristics of "exclusive".

The method provided in the present invention is to ensure that the trains can cooperatively and efficiently run in the "shared" route resource, while ensuring that the operations of the plurality of trains would not cause deadlock resulting in operation congestion when the route resource need to be "exclusive".

When the train receives an operation task from an ATS and transmits a resource application to a trackside resource manager, the trackside resource manager receives a resource application command from the train. In order to prevent the back train from obtaining, by application, more resources than the front train or preempting, prior to the front train, a switch resource that should be used for the front train which causes a deadlock, the trackside resource manager needs to determine whether the resource can be requisitioned for the back train on the basis of the scope and direction of the resource of the front train.

In order to prevent the resource in the downstream zone of the front train from being allocated, before the front train, to the back train, the trackside resource manager should reasonably screen a resource request from the vehicle-mounted train control device through a position relationship of the front and back trains.

Conditions for resource application are as follows:
1. a resource application command is received from the train; and
2. there is no other train on the applied route resource, or if another communication positioning train is on the applied route resource, and the applied resource is the same as a resource path allocated to the front train, a end point of the applied route resource does not exceed a end point of the resource allocated to the front train; and
3. the system is powered on and in an unlocked state or the system is in a successful initialization state currently; and
4. the system is not in an abnormal state currently.

When a condition of resource application is met, the trackside resource manager established a resource requisition state of the logical zone for the current train, and the route resource would automatically enter a sequencing state; and the trackside resource manager establishes a sequencing list for the resource.

If a resource already in the requisition state is requested by other trains again, the subsequent train is queued in the sequencing list in order.

### Resource conflict state

Detection of a conflict state of the resource in the step 1 is used to deal with an operation deadlock situation that may occur when a plurality of trains operate cooperatively, so as to ensure that a specific zone is exclusive to only one train during operation and avoid operation disruption. The resource conflict state needs to be comprehensively analyzed on the basis of deadlock and exclusive operation scenarios.

### Deadlock protection scenario 1:

When the front train has entered a turn-back route, in order to avoid that turn-back operation of the front train can not be completed due to tracking operation of the subsequent train, if an ATS transmits a turn-back operation task for the front train, the turn-back route and a critical switch required for the turn-back operation should be set as in a "turn-back mode".

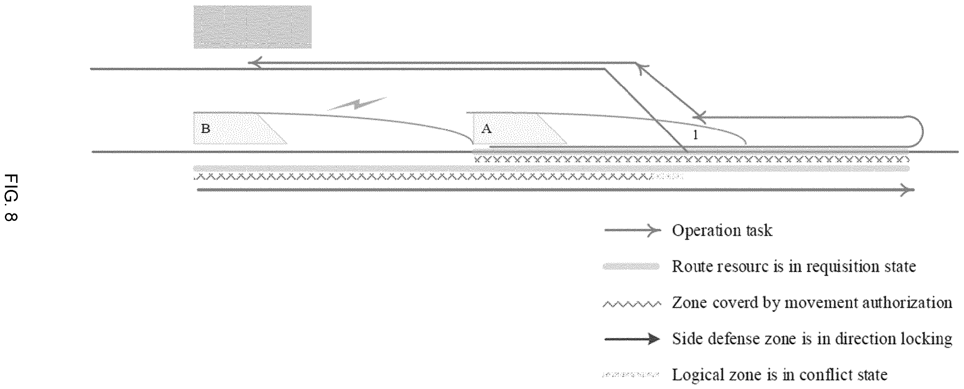

When the turn-back route and the critical switch where the train is located are in the turn-back mode, a corresponding logical zone resource on the route need to ensure that only one train is authorized to pass through. A turn-back operation scenario is shown in FIG. 8, wherein a train A needs to turn back through a turn-back route according to an operation task thereof, and in the process of turning back of the train A, the turn-back route and a switch movable zone of a critical switch No. 1 and a side defense zone of the switch are exclusively used by the train A. Therefore, when the logical zone resource is in the "turn-back mode" state, once the subsequent train applies for the route resource, the trackside resource manager should determine that the logical zone becomes in the "conflict" state.

When each logical zone within the scope of a departing operation task of the front train has been allocated and direction locking of the contained logical zone has been established (the direction thereof is inconsistent with the operation route), the system should determine that the "turn-back mode" is invalid immediately, so as to ensure that subsequent train can immediately perform a routing operation to improve turn-back capacity.

### Deadlock protection scenario 2:

Once the current train operation task contains a logical zone in an opposite direction of the current task (That is, a logical zone that is already in direction locking and oriented in the opposite direction to the current operation task), the trackside resource manager should determine that the logical zone becomes in the "conflict" state.

### Exclusive protection scenario:

For some route resources, only one train is allowed to occupy the zone (For example, a zone where a ventilation shaft is located and, in some projects, a route zone associated with a platform door in a route equipped with the platform door), which is defined as the exclusive resource. For example, when a front train passes through a ventilation shaft zone, to avoid poor ventilation in a tunnel, it is necessary to ensure that a subsequent train is authorized to enter the tunnel only after the front train has completely passed the ventilation shaft zone.

The current train operation task contains a logical zone occupied by another non-communication train (that is, the current logical zone may degrade trains), which is exclusively used by the non-communication train. Therefore, the system should determine the logical zone to be in the "conflict" state, and the subsequent train should be authorized to enter the logical zone only after the non-communication train has completely passed the logical zone.

When the logical zone of the route is defined as "exclusive" property, once the subsequent train applies for the route resource, the system should determine the logical zone to be in the "conflict" state, and the resource cannot be re-allocated to another train before being released by the current train, and the "conflict" resource occupied by the current train is regarded as a limit point by other trains.

A common feature of the "deadlock" protection scenario and the "exclusive" protection scenario is: the resource is exclusively used by one train, and a corresponding route resource can only be allocated to the subsequent train after the front train completely releases the resource.

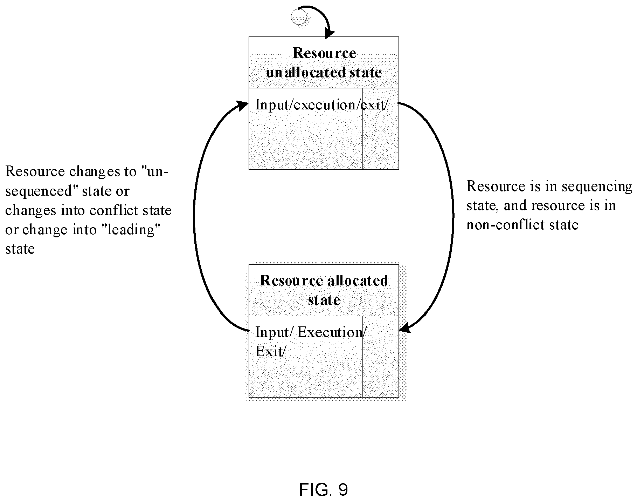

A resource allocation state model is shown as FIG. 9.

After the system is initialized, all route resources should be in an "unallocated" state.

Once the logical zone route resource is in the "sequencing" state and is in the "non-conflict" state, the resource manager determines that the logical zone is in the "allocated" state.

Once the logical zone route resource is in the "un-sequenced" state or changes into the conflict state or change into a "leading" state, the resource manager determines that the logical zone is in the "unallocated" state.

After the system is initialized, the resource manager determines that all the logical zones are in the "non-conflict" state.

When the following conditions are met, the resource manager should determine that a logical zone is in the "conflict" state:
1. the logical zone resource is in a sequencing state, and the logical zone has been in a direction locking state, and the direction of the logical zone is inconsistent with the direction of an operation task; or
2. the logical zone resource is in the sequencing state, and the logical zone has been occupied by a non-communication train; or
3. the logical zone resource is in the sequencing state, the train is not the first train in the sequence, and the zone (no-switch zone and switch zone) where the logical zone is located is in the turn-back mode; or
4. the logical zone resource is in the sequencing state, the train is not the first train in the sequence, and the zone where the logical zone is located belongs to a zone (such as a ventilation shaft zone, a route terminal zone) that only one train is allowed to enter.

When the following conditions are met, the system should determine that the logical zone is in the "non-conflict" state:
1. [if, in the resource sequencing state, the direction of the logical zone is not hostile to the direction of the current train operation task (the logical zone has no direction or is in the same direction as the current train operation task), and if, in the resource sequencing state, the logical zone is not occupied by a non-communication train, and the train is the first train in the sequence]; or
2. the resource becomes in an un-sequenced state.

In resources requisitioned by the train, if an exclusive resource has been released by the front train, that is, the resource is in the sequencing state and the resource is in the non-conflict state, then the resource corresponding to the logical section is in the allocation state, and the resource manager determines that the logical zone resource is automatically allocated to the train.

The trackside resource manager determines that the resource corresponding to the logical zone is in an "unallocated" state if any one of the following conditions is met:
1. after startup; or
2. the resource becomes in the un-sequenced state; or
3. the resource becomes in the conflict state.

### Resource release

The release of resource can be divided into automatic release of resource and manual cancellation of an operation task.

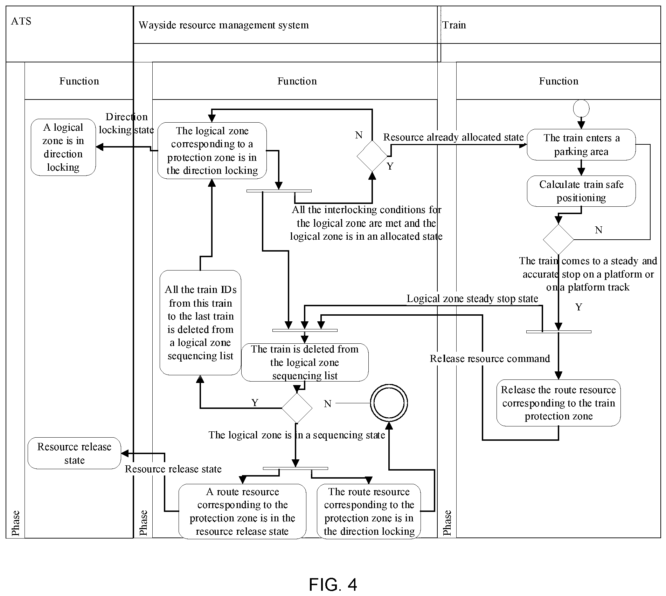

The train operates in the allocated resource; with movement of the train and positioning thereof, the train automatically transmits a command to release the corresponding logical zone resource to the trackside resource manager after determining that the train departs the logical zone. Train automatic resource release activities are shown as in FIG. 4.

In a fault scenario, the resource is released manually because position information of the train cannot be obtained. For direction locking that contains a protection section, the protection section is unlocked after the logical zone resource associated with the protection section is released and unlocked.

In a degraded condition, regardless of whether the positioning of the train is lost, the direction locking of each logical zone should be unlocked one by one according to the state of the logical zone and occupancy or idle of two continuous logical zones, and the corresponding resource should be released.

Once receiving the logical zone resource release command of the train, the trackside resource manager deletes the current train from the logical zone resource sequencing list and lifts the allocation state of the current train from the logical zone. If the number of trains in the logical zone resource list is zero (that is, the current logical zone resource is not in the sequencing state), the resource management system determines to lift the direction locking of the logical zone and release the resource of the logical zone.

When a degraded train crosses over a local logical zone and a downstream logical zone, if the downstream logical zone is not allocated to an adjacent subsequent train and is occupied by the current train, the trackside resource management system should release the resource in the local logical zone immediately once it detects that the local logical zone becomes clearance.

### A second phase: interlocking condition check

When resources are allocated, the interlocking condition check in the step 2 is specifically as follows: when the resource is in an allocation state, it is necessary to check whether relevant interlocking conditions on a route are met in real time, and determine a safe running direction of the current train (establishing a directional locking for the resource). The direction locking needs to meet the following interlocking conditions:
1. the switch is in a normal state and the position thereof is consistent with the position required by an operation task (if the allocated resource comprises a switch); and
2. the switch is in a locking state (if the allocated resource comprises a switch); and
3. the logical zone is not in a hostile direction; and
4. the logical zone is not occupied by a non-communication train; and
5. logical zones corresponding to all side defense zones of the switch are not occupied by the non-communication train (if the allocated resource comprises a switch); and
6. a contact route interface conditions is met (if the allocated resource is connected to the contact route interface); and
7. the system is powered on and in an unlocked state or the system is in a successful initialization state currently; and
8. the system is not in an abnormal state currently; and
9. the logical zone is not in a locking state currently (such as a platform door, a personnel protection switch, a flood gate, a switch movable zone, an adjacent station interface, a system locking).

If it detects that the switch is not in a specified position, the trackside resource manager supports an operation of the switch for the train once if the resource is already allocated for the current train, to prevent the switch from being damaged by the switch machine due to a long time operation.

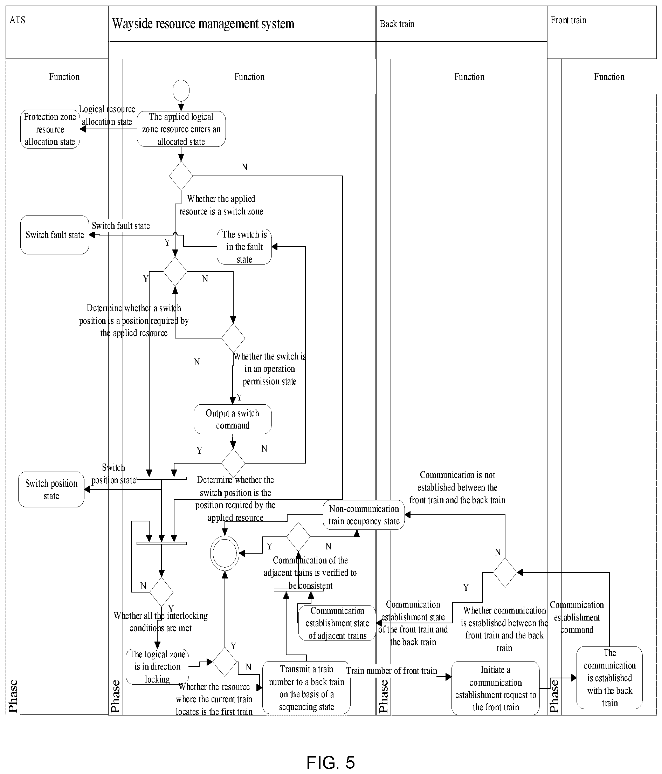

Meeting the requirements of interlocking conditions is a prerequisite for directional locking of the logical zone. A diagram of the interlocking condition check activities is shown as in FIG. 5.

For the switch position, if the switch position is not at a position required by the operation task, a control switch command is allowed until the switch turns to the position required by the operation task. For the logical zone resource corresponding to related functions such as a switch, a screen door, an escape door, a flood gate, a personnel protection area, an artificially locked area, and an adjacent route interface, in order to ensure the safety of train operation on the corresponding route, these functions activate a safety side, so it is necessary to protect the train from entering the route resource corresponding to these functions, or stopping in these areas.

After the establishment of direction locking, if any of the above interlocking conditions is not met, the direction locking state is still maintained in the trackside resource manager, but when transmitting the resource allocation state to the vehicle-mounted train control device, the trackside resource manager needs to calculate and transmit in real time on the basis of a comprehensive condition such as the direction locking state of the logical zone and the direction locking interlocking condition being met. If the logical zone is in the direction locking state, once any direction locking condition is not met (for example, a switch indication is lost suddenly), the trackside resource manager stops transmitting the allocation state of the logical zone to the vehicle-mounted train control device, and the vehicle-mounted train control device determines whether the logical zone is a end point of movement authorization on the basis of the allocation state of the logical zone. The current vehicle-mounted train control device determines a safe running direction for the vehicle-mounted train control device on the basis of the resource allocation state of the trackside resource manager, and comprehensively calculates the end point of the movement authorization in combination with the safe positioning of the front train.

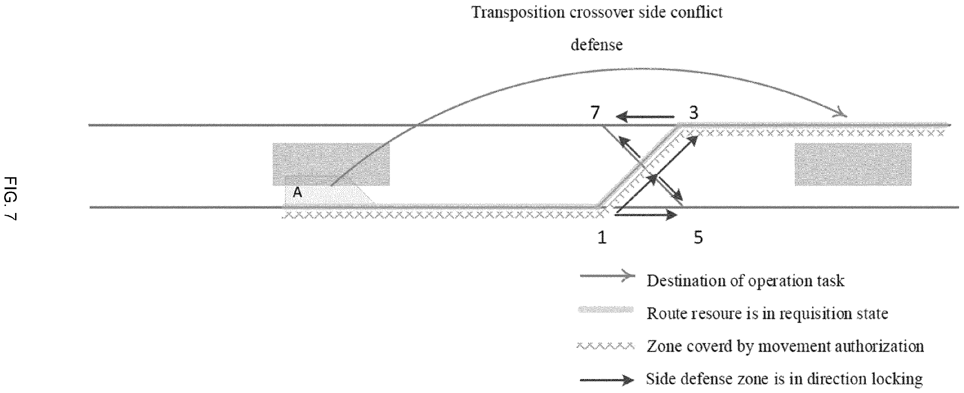

The direction locking is established, which is used to determine the safe operation direction of the train; to transmit hostile check information to adjacent routes to avoid the risk of front conflict; to establish a directional locking on a side defense zone associated with the switch towards the outside of the operation path to avoid the risk of side conflict. As shown in FIG. 7, an operation plan of a train A is to reach a target point through the reverse of switches 1 and 3. In order to realize side defense, after direction locking of the train A is established, direction locking of the reverse of switch 1 and switch 3 is established in an direction of the operation task, and direction locking of a normal position side defense zone of switch 1 and switch 3 is established in a direction away from the center of the switches, while direction locking of the related side defense zones with number of 7 and 5 is established away from the operation path of the train A. The direction locking can effectively protect the side conflict and the front conflict.

A third phase: movement authorization establishment when the trackside resource manager confirms the allocatable resource and direction thereof for the vehicle-mounted train control device, the vehicle-mounted train control device comprehensively calculates the movement authorization direction and the end point of the movement authorization for the train on the basis of the following conditions:
1. the allocated route resource received from the trackside resource manager are included in a resource range applied for by the vehicle-mounted train control device;
2. the direction of the allocated route resource received from the trackside resource manager is consistent with the direction of an operation path of the vehicle-mounted train control device; and
3. the safe positioning information of the rear of the front train is received from the vehicle-mounted train control device of the front train (if the current resource is allocated to two trains).

For a degraded train, the signal opening is used as a train operation certificate (or a movement authorization) of the degraded train, so if the current train becomes the degraded train, it is also necessary to determine the signal opening for the degraded train on the basis of a traditional interlocking principle.

The above are only better embodiments of the present invention and are not intended to limit the present invention, and any modification, equivalent replacement, improvement, etc. made within the spirit and principles of the present invention shall be included in the protection scope of the present invention.

The present invention is applicable to a CBTC system (a communication based train control system) and a TBTC system, and is also applicable to a CTCS system, an ETCS system, a PTC system, an ITCS system, a TACS system, and other signal systems in other modes. Therefore, the claims of the present invention are also suitable for these systems and similar systems.

### A specific implementation process:

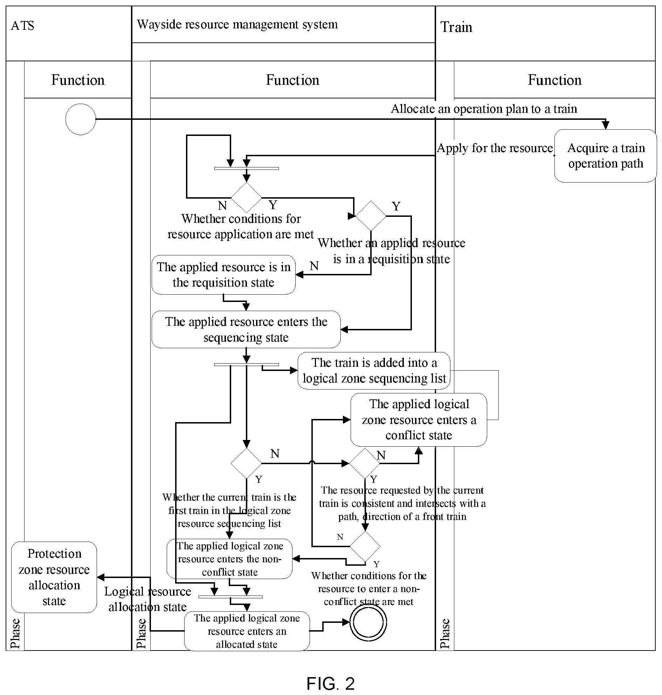

Activities of allocating a resource to the train is shown as in FIG. 2:
1. a vehicle-mounted train control device acquires a current train operation path according to an operation plan of an ATS and applies for a route resource from a trackside train control system;
2. in order to prevent a back train from requisitioning a route resource in downstream of a front train before the front train requisitions the route resource in downstream, a trackside resource manager determines whether a condition for resource application is met on the basis of this protection principle; if yes, it is determined that the route resource is in a "requisitioned" state, and the current train requisitions the route resource;
3. once a logical zone route resource is requisitioned by a train, the trackside resource manager determines that the route resource is in a sequencing state, and establishes a sequencing list of the logical zone;
4. if the current train is the first train in the logical zone resource sequencing list, the trackside resource manager determines that the route resource is in a "non-conflict" state;
5. if the current train is not the first train in the logical zone resource sequencing list, and the resource requested by the current train is consistent and intersects with the path, direction of the front train, checking whether a condition for the route resource to enter the "non-conflict" state is met; if yes, the trackside resource manager determines that the route resource is in the "non-conflict" state; otherwise, the trackside resource manager determines that the route resource is in the "conflict" state; and
6. if the logical zone resource where the current train is located is in a "sequencing" state and the applied logical zone resource is in the "non-conflict" state, the trackside resource manager determines that the logical zone resource is allocated to the train (a resource allocation state diagram is as shown in FIG. 9) and transmits to the ATS that the logical zone is in the allocated state.

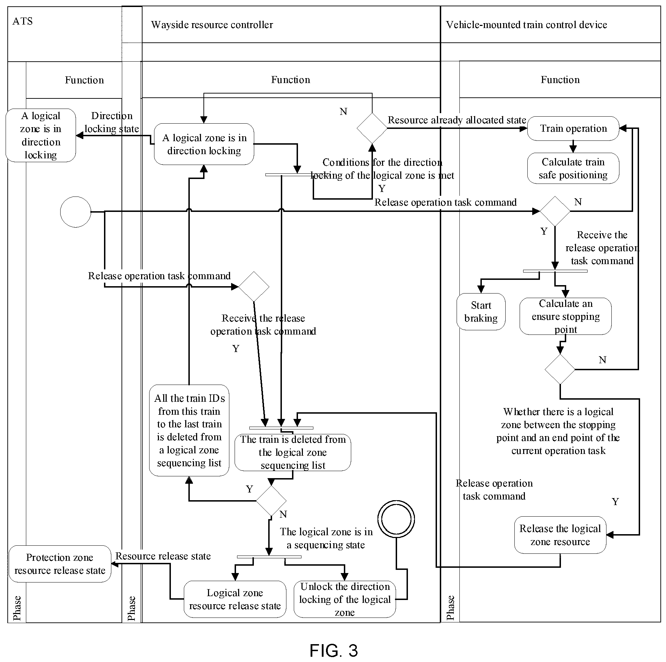

A diagram of manual resource release activities is as shown in FIG. 3:
1. when a plan is manually cancelled and resources is to be released, the "release operation task command" is transmitted to the vehicle-mounted train control device through the ATS; if the vehicle-mounted train control device receives the command of release operation task, it would immediately brake, and at the same time calculate the reliable stopping position of the train under the most unfavorable circumstances to calculate the "ensure stopping point";
2. if there is an idle logical zone between a stopping point and the end point of the current operation task, the train transmits a resource release command for the logical zone to the resource management system; after receiving the command to cancel the operation task and the command to release resources from the train, the trackside resource manager deletes the train from the sequencing list of the logical zone, and sets the current train to the release state in the logical zone;
3. after deleting the train from the sequencing list of the logical zone, the trackside resource manager determines whether the logical zone is still in the sequencing state; if the current logical zone is in the "un-sequencing" state, the resource state of the logical zone is released and the direction locking state of the logical zone is lifted; if the current logical zone is still in the "sequencing" state, all train IDs from this train to the last train need to be deleted from the logical zones to prevent subsequent trains from expropriating the downstream resources of front trains prior to the front trains.

A diagram of activities of automatic resource release is as shown in FIG. 4:
1. a train runs in an allocated resource, with the movement of the train and the positioning thereof, a command to release the corresponding logical zone resource is automatically transmitted to a trackside resource manager after determining that the train has left a logical zone;
2. once receiving the logical zone resource release command from the train, the trackside resource manager deletes the current train from a logical zone resource sequencing list and lifts the allocation state of the current train in the logical zone;
3. after deleting the train from the sequencing list of the logical zone, the trackside resource manager determines whether the logical zone is still in the sequencing state; if the current logical zone is in the "un-sequencing" state, the resource state of the logical zone is released and the direction locking state of the logical zone is lifted; if the current logical zone is still in the "sequencing" state, all train IDs from this train to the last train need to be deleted from the logical zones to prevent subsequent trains from expropriating the downstream resources of front trains prior to the front trains.

A diagram of resource interlocking condition check activities is as shown in FIG. 5:
1. An interlocking condition check stage mainly determines whether a zone on a corresponding route meets safe operation conditions; if a route resource has been allocated for a train, for the logical zone resource corresponding to related functions such as a switch, a screen door, an escape door, a flood gate, a personnel protection area, an artificially locked area, and an adjacent route interface, in order to ensure the safety of train operation on the corresponding route, once a safety side state of any one of the above functions is activated, it is necessary to protect the train from entering the route resource corresponding to these functions; therefore, firstly whether the current allocated resource is the switch zone is determined, and if the applied route resource does not include a switch related zone, whether all the interlocking conditions of the applied route resources are met is determined;
2. if the applied route resource comprises a switch related zone, it is necessary to determine whether the current position of the switch is a position applied by the current train operation task; if the current position of the switch is inconsistent with the position applied by the train, whether it is allowed to operate the switch is determined; if the current position of the switch is consistent with the position applied by the train, a switch command is outputted; otherwise, the switch remains in the current state;
3. after a switch action command is outputted, on the basis of a feedback of a switch machine, whether the current position of the switch is the position applied by the current train operation task is determined; if the current position of the switch is inconsistent with the position applied by the train, the switch is determined to be in a fault state; and if the current position of the switch is consistent with the position applied by the train, the current switch position state is immediately transmitted to an ATS;
4. whether all the relevant interlocking conditions corresponding to the current allocated route resource are met is determined (the state corresponding to the relevant interlocking function is in a non-safety side state), and if yes, it is determined that the relevant interlocking conditions of the logical zone are met and the direction locking of the logical zone is activated, of which the direction is the direction required by the train operation task;
5. whether the logical zone of the current train is the first train is determined, and if not, a train ID of a front train is transmitted to the current train, and the current train initiates a request for establishing communication with the front train; and
6. if communication between the front train and the back train is successfully established, a communication establishment state of adjacent trains is transmitted to the trackside resource manager, and whether the two trains communicating are adjacent trains is verified in combination with the sequencing list of the resource; if the verification fails, the front train is determined as a non-communication train, and the front train is necessary to clear the entire logical zone and release the direction locking and resource in the zone before a movement authorization for the back train is established.

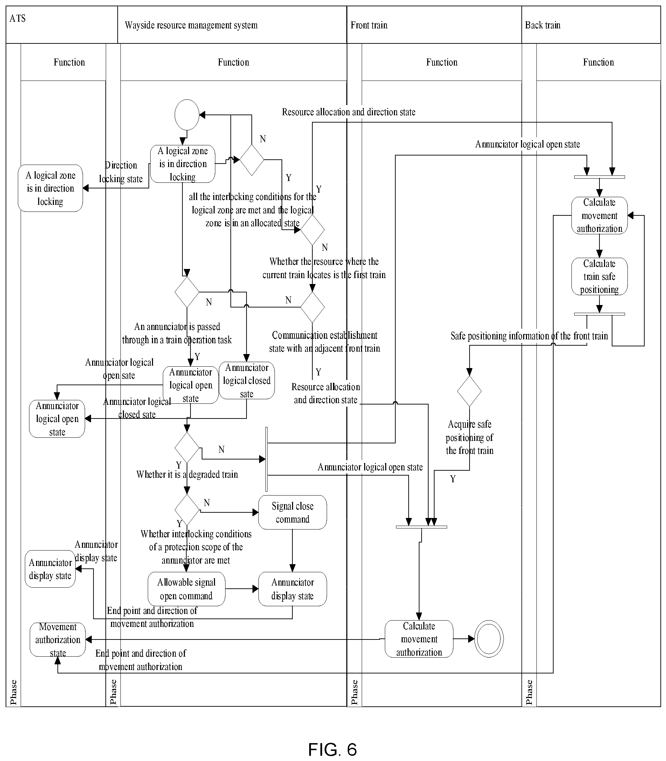

A movement authorization decision is as shown in FIG. 6:
1. when a locking has been established in the direction of the logical zone, the trackside resource manager needs to determine a "resource already allocated" state in combination with an interlocking condition of the current logical zone resource and direction locking, and then transmit it to a vehicle-mounted train control device to calculate a movement authorization for the vehicle-mounted train control device and determine the resource and direction;
2. if an annunciator is passed through in an operation task and a protection direction of the annunciator is consistent with the operation task, a logical "open" state of the current annunciator is set on the basis of the established direction locking; otherwise, the logical state of the annunciator becomes in a "close" state;
3. if a train approaching the annunciator is a normal train (not in a fault state), the annunciator logical open state is transmitted to the vehicle-mounted train control device; if the train approaching the annunciator is a degraded train, it is necessary to determine the signal opening on the basis of the interlocking conditions within an annunciator protection scope and drive the outdoor annunciator to open as a degraded train running certificate; otherwise, the outdoor annunciator is driven to be closed; and
4. if the current train is a controlled train, the train comprehensively calculates the movement authorization on the basis of a feedback of "resource already allocated state", the logical open state of the annunciator, and the safe positioning information calculated by a front train, and transmits the movement authorization state to an ATS.

The above are only specific embodiments of the present invention, but the protection scope of the present invention is not limited to this, and any technical person familiar with the technical field can easily think of various equivalent modifications or replacements within the technical scope disclosed by the present invention, and these modifications or replacements shall be covered by the protection scope of the present invention. Therefore, the protection scope of the present invention shall be subject to the protection scope of the claims.

## Claims

1. A train control system based on resource management, comprising a dispatching center server, a trackside resource manager, and a vehicle-mounted train control device, wherein the vehicle-mounted train control device is connected to the dispatching center server and the trackside resource manager respectively;
the dispatching center server is used to monitor and control the operation of a train;
the trackside resource manager is used to manage a resource, control a switch, establish a movement authorization direction, and control an annunciator; and
the vehicle-mounted train control device is used to calculate safe positioning, calculate a movement authorization, release a route resource, establish a train-train communication with front and back trains when the resource is in a "shared" state to interact the safe positioning of the trains in real time, and determine a end point of the movement authorization for the back train.

2. The train control system based on resource management according to claim 1, wherein the resource management comprises:
on the basis of a resource characteristics, the operation of the train, and a safe protection principle, it is determined that a plurality of trains concurrently apply the route resource and an operation deadlock is avoided when the plurality of trains compete for the resource;
when a resource sharing state is determined on the basis of an operation scenario and the route resource, the train-train communication is used for cooperative operation, so as to maximize the use of the route resource and improve a route passing-through capacity; and
when the route resource is in an exclusive state, the front and back trains are orderly managed to use the exclusive resource by using conflict and sequencing management of the resource and the principles of first-come, first-served and release upon used.

3. The train control system based on resource management according to claim 2, wherein the resource sharing means that the trackside resource manager allocates route resources to the front and back trains simultaneously and initiates the establishment of the communication between the front and back trains under a condition that operation tasks and operation paths of the front and back trains are consistent and the operation deadlock is avoided effectively.

4. The train control system based on resource management according to claim 2, wherein the resource being exclusive means that for a "conflicting" resource during operation, if operation tasks of the front and back trains are inconsistent and operation paths have an intersection, the trackside resource manager, on the basis of the principle of first come first served, allocates the resource to the back train and determine a safe operation direction only after the front train leaves the zone and releases the resource.

5. A control method using the train control system based on resource management according to claim 1, wherein the method comprises the following steps:
step 1, managing a resource: application, sequencing, conflict, allocation, and release states of the resource are determined according to a resource management policy on the basis of a resource application and a resource release initiated by the vehicle-mounted train control device;
step 2, interlocking relationship check: a switch is controlled and a direction locking of a related logical zone is established on the basis of the allocation state of the resource and an interlocking condition of the logical zone; the trackside resource manager determines a safe operation direction of the resource, and transmits, in combination with the interlocking condition of the logical zone, the resource allocation state on the basis of the safe operation direction to the vehicle-mounted train control device; and
step 3, establishing a movement authorization: on the basis of the allocation and the direction locking of the logical zone, an interlocking condition of the related logical zone, and the safe positioning of the front train, the vehicle-mounted train control device calculates the end point of the movement authorization; and meanwhile, the trackside resource manager controls a signal of the train in a degraded mode on the basis of the direction locking of the trackside logical zone and the interlocking condition of the related logical zone.

6. The control method according to claim 5, wherein in step 1, the resource management policy is specifically made as follows: when the train executes an operation task, in order to avoid deadlock caused by concurrent preemption of the route resource by a plurality of trains, the route resource is sub-divided and the characteristics of the route resource is defined, and a reasonable resource management policy is made on the basis of the characteristics of the route resource.

7. The control method according to claim 6,the subdividing the route resource is specifically as follows: dividing the resource into a shared resource and an exclusive resource,
wherein the shared resource is as follows: when the route resource is available for a plurality of trains to continuously pass, the logical zone is allowed to be requisitioned by the plurality of trains at the same time; and after the logical zone is requisitioned by the plurality of trains, the trains are sequenced according to the front and back positions of the trains; such resource is the shared resource;
the exclusive resource is as follows: when operation of a subsequent train conflicts with operation of the first train, the resource is exclusively allocated on the basis of resource conflict management, and the resource is not allowed to be allocated to the subsequent train until the first train releases the resource.

8. The control method according to claim 7, the making a reasonable resource management policy on the basis of the characteristics of the route resource is specifically as follows: the trains can cooperatively and efficiently run in the shared route resource, while ensuring that the operations of the plurality of trains would not cause deadlock resulting in operation congestion when the route resource need to be "exclusive".

9. The control method according to claim 5, wherein the resource application in the step 1 needs to meet the following conditions at the same time:
(a1) a resource application command is received from the train;
(a2) there is no other train on the applied route resource, or if another communication positioning train is on the applied route resource, and the applied resource is the same as a resource path allocated to the front train, a end point of the applied route resource does not exceed a end point of the resource allocated to the front train;
(a3) the system is powered on and in an unlocked state or the system is in a successful initialization state currently; and
(a4) the system is not in an abnormal state currently.

10. The control method according to claim 5, wherein the sequencing of the resource in the step 1 is specifically as follows: when a condition of resource application is met, the trackside resource manager established a resource requisition state of the logical zone for the current train, and the route resource would automatically enter a sequencing state; and the trackside resource manager establishes a sequencing list for the resource; and if a resource already in the requisition state is requested by other trains again, the subsequent train is queued in the sequencing list in order.

11. The control method according to claim 5, wherein detection of a conflict state of the resource in the step 1 is used to deal with an operation deadlock situation that may occur when a plurality of trains operate cooperatively, so as to ensure that a specific zone is exclusive to only one train during operation.

12. The control method according to claim 11the conflict state of the resource in the step 1 includes a first deadlock protection scenario, a second deadlock protection scenario and an exclusive protection scenario; and a common feature of the three protection scenarios is: the resource is exclusively used by one train, and a corresponding route resource can only be allocated to the subsequent train after the front train completely releases the resource.

13. The control method according to claim 12,the first deadlock protection scenario is specifically as follows:
when the front train has entered a turn-back route, in order to avoid that turn-back operation of the front train can not be completed due to tracking operation of the subsequent train, if an ATS transmits a turn-back operation task for the front train, the turn-back route and a critical switch required for the turn-back operation should be set as in a "turn-back mode";
when the turn-back route and the critical switch where the train is located are in the turn-back mode, a corresponding logical zone resource on the route need to ensure that only one train is authorized to pass through; when the logical zone resource is in the "turn-back mode" state, once the subsequent train applies for the route resource, the trackside resource manager should determine that the logical zone becomes in the "conflict" state; and
when each logical zone within the scope of a departing operation task of the front train has been allocated and direction locking of the contained logical zone has been established, it is determined that the "turn-back mode" is invalid immediately.

14. The control method according to claim 12, the second deadlock protection scenario is specifically as follows:
once the current train operation task contains a logical zone in an opposite direction of the current task, the trackside resource manager should determine that the logical zone becomes in the "conflict" state.

15. The control method according to claim 12, the exclusive protection scenario is specifically as follows:
for some route resources, only one train is allowed to occupy the zone, which is defined as the exclusive resource;
the current train operation task contains a logical zone occupied by another non-communication train, which is exclusively used by the non-communication train; the system should determine the logical zone to be in the "conflict" state, and the subsequent train should be authorized to enter the logical zone only after the non-communication train has completely passed the logical zone; and
when the logical zone of the route is defined as "exclusive" property, once the subsequent train applies for the route resource, the system determines the logical zone to be in the "conflict" state, and the resource cannot be re-allocated to another train before being released by the current train, and the "conflict" resource occupied by the current train is regarded as a limit point by other trains.

16. The control method according to claim 11, wherein after the system is initialized, the resource manager determines that all the logical zones are in the "non-conflict" state;
when any one of the following conditions is met, the resource manager should determine that a logical zone is in the "conflict" state:
(b1) the logical zone resource is in a sequencing state, and the logical zone has been in a direction locking state, and the direction of the logical zone is inconsistent with the direction of an operation task;
(b2) the logical zone resource is in the sequencing state, and the logical zone has been occupied by a non-communication train;
(b3) the logical zone resource is in the sequencing state, and the train is not the first train in the sequence, if the zone where the logical zone is located is in the turn-back mode;
(b4) the logical zone resource is in the sequencing state, and the train is not the first train in the sequence, if the zone where the logical zone is located belongs to a zone that only one train is allowed to enter;
when any one of the following conditions is met, the system should determine that the logical zone is in the "non-conflict" state:
(c1) if, in the resource sequencing state, the direction of the logical zone is not hostile to the direction of the current train operation task, and if, in the resource sequencing state, the logical zone is not occupied by a non-communication train, and the train is the first train in the sequence; and
(c2) the resource becomes in an un-sequencing state.

17. The control method according to claim 16, wherein the allocation of the resource in step 1 is specifically as follows:
in resources requisitioned by the train, if an exclusive resource has been released by the front train, that is, the resource is in the sequencing state and the resource is in the non-conflict state, then the resource corresponding to the logical section is in the allocation state, and the resource manager determines that the logical zone resource is automatically allocated to the train;
the trackside resource manager determines that the resource corresponding to the logical zone is in an "unallocated" state if any one of the following conditions is met:
(d1) after startup;
(d2) the resource becomes in the un-sequencing state; or
(d3) the resource becomes in the conflict state.

18. The control method according to claim 5, wherein the release of resource in step 1 comprises automatic release of resource and manual cancellation of an operation task;
the automatic release of resource is specifically:
the train operates in the allocated resource; with movement of the train and positioning thereof, the train automatically transmits a command to release the corresponding logical zone resource to the trackside resource manager after determining that the train departs the logical zone; and
the manual cancellation of the operation task is specifically as follows:
in a fault scenario, the resource is released manually because position information of the train cannot be obtained.

19. The control method according to claim 5 or 18, wherein a specific process of the release of resource in the step 1 is as follows:
in a degraded condition, regardless of whether the positioning of the train is lost, the direction locking of each logical zone should be unlocked one by one according to the state of the logical zone and occupancy or idle of two continuous logical zones, and the corresponding resource should be released; and
once receiving the logical zone resource release command of the train, the trackside resource manager deletes the current train from the logical zone resource sequencing list and lifts the allocation state of the current train from the logical zone; if the number of trains in the logical zone resource list is zero, the trackside resource manager determines to lift the direction locking of the logical zone and release the resource of the logical zone.

20. The control method according to claim 5, wherein the interlocking condition check in the step 2 is specifically as follows: when the resource is in an allocation state, it is necessary to check whether relevant interlocking conditions on a route are met in real time, and determine a safe running direction of the current train,
wherein the direction locking needs to meet the following interlocking conditions at the same time:
(e1) the switch is in a normal state and the position thereof is consistent with the position required by an operation task;
(e2) the switch is not in a locking state;
(e3) the logical zone is not in a hostile direction;
(e4) the logical zone is not occupied by a non-communication train;
(e5) logical zones corresponding to all side defense zones of the switch are not occupied by the non-communication train;
(e6) a contact route interface condition is met;
(e7) the system is powered on and in an unlocking state or the system is in a successful initialization state currently;
(e8) the system is not in an abnormal state currently; and
(e9) the logical zone is not in a locking state;
for the switch position, if the switch position is not at a position required by the operation task, a control switch command is allowed until the switch turns to the position required by the operation task;
after the establishment of direction locking, if any of the above interlocking conditions is not met, the direction locking state is still maintained in the trackside resource manager, but when transmitting the resource allocation state to the vehicle-mounted train control device, the trackside resource manager needs to calculate and transmit in real time on the basis of a comprehensive condition such as the direction locking state of the logical zone and the direction locking interlocking condition being met; if the logical zone is in the direction locking state, once any direction locking condition is not met, the trackside resource manager stops transmitting the allocation state of the logical zone to the vehicle-mounted train control device, and the vehicle-mounted train control device determines whether the logical zone is a end point of movement authorization on the basis of the allocation state of the logical zone; and the current vehicle-mounted train control device determines a safe running direction for the vehicle-mounted train control device on the basis of the resource allocation state of the trackside resource manager, and comprehensively calculates the end point of the movement authorization in combination with the safe positioning of the front train; and the direction locking is established, which is used to determine the safe operation direction of the train; to transmit hostile check information to adjacent routes to avoid the risk of front conflict; to establish a directional locking on a side defense zone associated with the switch towards the outside of the operation path to avoid the risk of side conflict.

21. The control method according to claim 5, wherein the movement authorization establishment in the step 3 is specifically as follows:
when the trackside resource manager confirms the allocatable resource and direction thereof for the vehicle-mounted train control device, the vehicle-mounted train control device comprehensively calculates the movement authorization direction and the end point of the movement authorization for the train on the basis of the following conditions:
(f1) the allocated route resource received from the trackside resource manager are included in a resource range applied for by the vehicle-mounted train control device;
(f2) the direction of the allocated route resource received from the trackside resource manager is consistent with the direction of an operation path of the vehicle-mounted train control device; and
(f3) the safe positioning information of the rear of the front train is received from the vehicle-mounted train control device of the front train,
wherein for a degraded train, the signal opening is used as a train operation certificate or movement authorization of the degraded train, so if the current train becomes the degraded train, it is also necessary to determine the signal opening for the degraded train on the basis of a traditional interlocking principle.
